# EUROPÄISCHE PATENTANMELDUNG

(11) **EP 2 873 948 A1**
(43) Veröffentlichungstag der Anmeldung: **20.05.2015**
(21) Anmeldenummer: 14193263.2
(22) Anmeldetag: 14.11.2014
(51) Int. Cl.: G01C 15/02

(54) **Zielmarkenvorrichtung für ein Vermessungssystem**

(30) Priorität: 15.11.2013 DE 102013223401
(71) Anmelder: Geodata Messtechnik GmbH, 8700 Leoben (AT)
(72) Erfinder: Wagner, Josef, 8103 Eisbach (AT); Golser, Johann, 5020 Salzburg (AT)
(74) Vertreter: Dilg, Haeusler, Schindelmann Patentanwaltsgesellschaft mbH

(57) **Zusammenfassung**

Die vorliegende Erfindung betrifft eine Zielmarkenvorrichtung (100) für ein Vermessungssystem. Die Zielmarkenvorrichtung (100) weist ein Zielmarkenelement (101) und einen Zielmarkenhalter (110) auf. Der Zielmarkenhalter (110) weist einen Halteabschnitt (111) auf, an welchem das Zielmarkenelement (101) befestigt ist. Der Zielmarkenhalter (110) weist einen Befestigungsabschnitt (112) auf, welcher zur lösbaren Befestigung an ein Fixierelement (200) des Vermessungssystems ausgebildet ist. Der Zielmarkenhalter (110) weist eine Sollbruchstelle (113) auf, welche zwischen dem Halteabschnitt (111) und dem Befestigungsabschnitt (112) ausgebildet ist.

## Beschreibung

### Technisches Gebiet

Die vorliegende Erfindung betrifft eine Zielmarkenvorrichtung für ein Vermessungssystem und ein Vermessungssystem zum Vermessen z.B. von Verschiebungen auf Tunnelbaustellen. Ferner betrifft die vorliegende Erfindung ein Verfahren zum Platzieren einer Zielmarkenvorrichtung..

### Hintergrund der Erfindung

Zur Vermessung von Baustellen, insbesondere Tunnelbaustellen, werden an vorbestimmten Orten, beispielsweise an einer Tunnelwand, Zielmarken angebracht, welche von optischen Systemen, wie beispielsweise optischer Vermessungssystemen, optisch anvisiert werden. Beispielsweise wird hierzu ein Tachymeter eingesetzt.

Als Zielmarke wird in der Vermessungstechnik eine Messmarke auf Glas, Metall oder einem Reflektor verstanden. Beispielsweise kann eine Zielmarke einen Reflektor mit einer innenliegenden Markerstelle (Loch oder Punkt) aufweisen. Zielmarken werden durch das Fadenkreuz eines optischen Systems, z.B. mit einem Tachymeter, angezielt.

Bei der Vermessung von Tunnelbaustellen müssen die Zielmarken an genau vorbestimmten Positionen der Tunnelwände angeordnet werden. Ein permanentes Befestigen der Zielmarken an Tunnelwänden birgt jedoch das Risiko, dass Baustellenfahrzeuge, wie beispielsweise Bohrjumbos oder Lastkraftwagen, die Zielmarken abreißen.

Um dies zu verhindern, werden mehrteilige Zielmarken eingesetzt, welche aus einem sog. Target und einem Adapter mit Zapfen, dem sog. Wildzapfen, bestehen. Der Adapter kann an einem Wandanker lösbar befestigt werden. Das Target ist ferner lösbar an dem Adapter befestigt. Das Target wird nur für einen Vermessungsdurchgang an dem Adapter befestigt und nach dem Vermessungsdurchgang entfernt oder verbleibt für längere Zeit und mehrere Messkampagnen am Adapter. Der Adapter mit Wildzapfen bleibt permanent an dem Wandanker befestigt.

Der Adapter weist eine Sollbruchstelle auf, damit ein vorbeistreifendes Baustellenfahrzeug ausschließlich den Wildzapfen abreißt, ohne den Wandanker zu verformen und somit die festgelegte Position, welche für die Vermessung notwendig ist, zu ändern. Ein zerstörter Adapter kann in einfacher Art und Weise durch einen neuen Adapter mit Wildzapfen ausgetauscht werden. Die Vermessungsposition wird dadurch nicht beeinflusst.

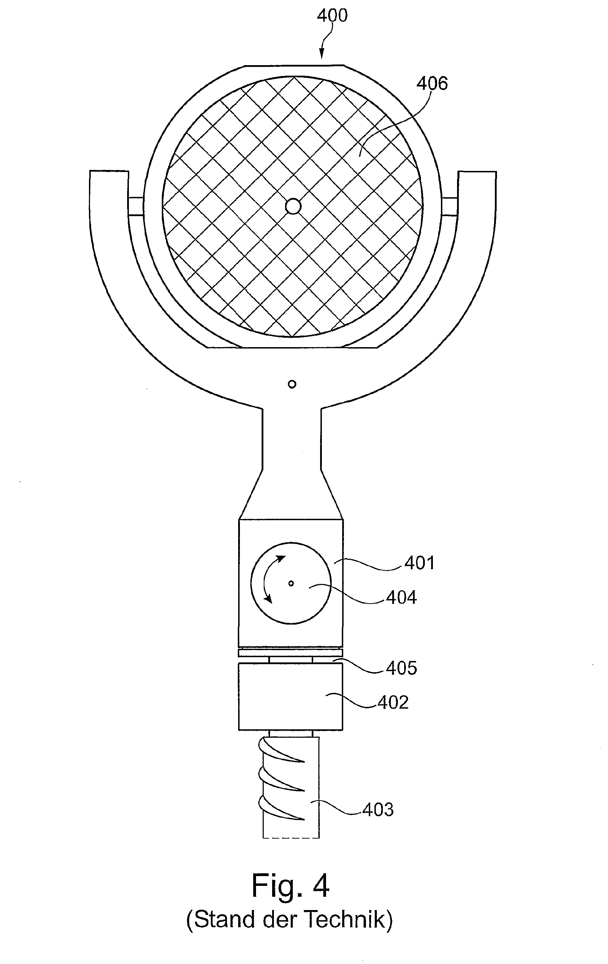

Fig. 4 zeigt eine herkömmliche Zielmarke 400. Ein herkömmlicher metallischer Wandanker 403 kann beispielsweise an einer Tunnelwand befestigt werden. Auf dem herkömmlichen Wandanker 403 wird ein herkömmlicher Adapter 402 mit Wildzapfen aus Kunststoff gesteckt. Auf dem herkömmlichen Wildzapfen wird ein herkömmliches Target 401 aus Kunststoff gesteckt. Zwischen dem Target 401 und dem Wildzapfen wird eine herkömmliche Sollbruchstelle 405 ausgebildet. Die herkömmliche Sollbruchstelle 405 ist dabei Teil des Adapters 402. Eine herkömmliche Klemmschraube 404 kann in das Target 401 eingeschraubt werden, um eine Klemmverbindung mit dem herkömmlichen Adapter 402 mit Wildzapfen bereitzustellen. An dem Target 401 ist schwenkbar ein herkömmlicher Reflektor 406 angeordnet. Streift nun ein Baufahrzeug den Reflektor 406 oder den Adapter 402 bricht der Adapter 402 an der Sollbruchstelle 405.

Die herkömmliche Zielmarke für 400 besteht somit aus zwei getrennten Teilen, einerseits dem Target 401 und andererseits dem Adapter 402 mit Wildzapfen. Da gerade im Tunnelbaum solche Zielmarken 400 in großen Stückzahlen eingesetzt werden, führt die oben beschriebene mehrteilige Ausbildung einer solchen Zielmarke 400 zu hohen Herstellkosten.

### Darstellung der Erfindung

Es ist eine Aufgabe der vorliegenden Erfindung, die Herstellkosten von Zielmarken für ein Vermessungssystem zu reduzieren.

Diese Aufgabe wird durch eine Zielmarkenvorrichtung für ein Vermessungssystem, durch ein Vermessungssystem zum Vermessen von einer Baustelle, z.B. von Verschiebungen von Tunnelwänden auf einer Tunnelbaustelle, und durch ein Verfahren zum Platzieren einer Zielmarkenvorrichtung in einer Baustelle gemäß den unabhängigen Ansprüchen gelöst.

Gemäß einem ersten Aspekt der vorliegenden Erfindung wird eine Zielmarkenvorrichtung für ein Vermessungssystem beschrieben. Die Zielmarkenvorrichtung weist ein Zielmarkenelement und einen Zielmarkenhalter auf. Der Zielmarkenhalter weist einen Halteabschnitt auf, an welchem das Zielmarkenelement befestigt ist. Der Zielmarkenhalter weist einen Befestigungsabschnitt auf, welcher zur lösbaren Befestigung an ein Fixierelement des Vermessungssystems ausgebildet ist. Der Zielmarkenhalter weist eine Sollbruchstelle auf, welche zwischen dem Halteabschnitt und dem Befestigungsabschnitt ausgebildet ist.

Gemäß einem weiteren Aspekt der vorliegenden Erfindung wird ein Vermessungssystem zum Vermessen einer Baustelle, insbesondere einer Tunnelbaustelle, beschrieben. Das Vermessungssystem weist eine oben beschriebene Zielmarkenvorrichtung und das Fixierelement auf. Der Befestigungsabschnitt ist lösbar an das Fixierelement befestigt.

Gemäß einem weiteren Aspekt der vorliegenden Erfindung wird ein Verfahren zum Platzieren einer Zielmarkenvorrichtung in einer Baustelle beschrieben. Gemäß dem Verfahren wird ein Befestigungsabschnitt der Zielmarkenvorrichtung an ein Fixierelement des Vermessungssystems lösbar befestigt. Der Zielmarkenhalter weist einen Halteabschnitt auf, an welchem ein Zielmarkenelement befestigt ist. Der Zielmarkenhalter weist eine Sollbruchstelle auf, welche zwischen dem Halteabschnitt und dem Befestigungsabschnitt ausgebildet ist.

Das Fixierelement ist beispielsweise ein (Metall-)bolzen, welcher in einer Wandbohrung, zum Beispiel einer Tunnelwand, befestigt bzw. räumlich fixiert ist. Das Fixierelement kann beispielsweise auch an eine Wand gemörtelt werden. Alternativ kann das Fixierelement einen räumlich fixierten Bodenständer ausbilden.

Das Zielmarkenelement weist beispielsweise eine Messmarke (Markerstelle) auf, welche auf Glas, Metall oder einem Reflektor des Zielmarkenelements angeordnet ist. Beispielsweise kann ein Zielmarkenelement einen Reflektor mit der innenliegenden Markerstelle (Loch oder Punkt) aufweisen. Zielmarkenelemente werden z.B. durch das Fadenkreuz eines optischen Systems, z.B. eines Tachymeters, angezielt.

Der Zielmarkenhalter kann aus Metall oder bevorzugt aus einem Kunststoffmaterial hergestellt sein. Insbesondere ist der Zielmarkenhalter aus einem Material hergestellt, welches spröder als das Fixierelement ist, um bei einem Vorbeistreifen eines Baufahrzeugs von dem Fixierelement abzureißen. Wie weiter unten beschrieben kann der Zielmarkenhalter der vorliegenden Erfindung insbesondere integral und einstückig ausgebildet sein.

Der Halteabschnitt des Zielmarkenhalters weist beispielsweise Befestigungspins oder Befestigungsschrauben zur Befestigung des Zielmarkenelements auf. Ferner kann der Halteabschnitt beispielsweise Befestigungsflächen aufweisen, an welchen das Zielmarkenelement mittels einer stofflichen Verbindung (zum Beispiel mittels Klebens) befestigbar ist.

Der Befestigungsabschnitt weist beispielsweise eine Aufnahmebohrung auf, mittels welcher der Befestigungsabschnitt auf das Fixierelement aufgesteckt werden kann. Ferner kann der Befestigungsabschnitt einen Bolzen bzw. einen Stift aufweisen, welcher in einem Dübel oder eine Bohrung des Fixierelements hineingesteckt werden kann.

Mit der eingangs beschriebenen herkömmlichen Zielmarke ist aufgrund der Anordnung der herkömmlichen Sollbruchstelle zwischen dem Wandbolzen als herkömmlicher Wandanker und dem herkömmlichen Adapter keine integrale und einstückige Ausbildung des herkömmlichen Adapter und des herkömmlichen Targets möglich, da der Wandbolzen durch den Adapter hindurch in das herkömmliche Target bis zu dem Bereich der herkömmlichen Klemmschraube ragen müsste. Dies wäre konstruktiv äußerst komplex und schwierig.

Mit der vorliegenden Erfindung wird nun erstmalig die Sollbruchstelle zwischen dem Halteabschnitt und dem Befestigungsabschnitt des Zielmarkenhalters ausgebildet. Dies ermöglicht im Gegensatz zu einer eingangs beschriebenen herkömmlichen Zielmarke, dass kein Adapter mit Sollbruchstelle zwischen dem Befestigungsabschnitt und beispielsweise einem Wandbolzen als Fixierelement ausgebildet werden muss. Somit ist es mit der Zielmarkenvorrichtung gemäß der vorliegenden Erfindung erstmalig möglich, einen integral und einstückig ausgebildeten Zielmarkenhalter bereitzustellen, ohne die Funktionalität einzuschränken.

Aufgrund dieser erfindungsgemäßen einstückigen und integralen Ausbildung des Zielmarkenhalters können somit Material und entsprechend Herstellkosten gesenkt werden.

Gemäß einer weiteren beispielhaften Ausführungsform weist der Zielmarkenhalter zwischen dem Halteabschnitt und dem Befestigungsabschnitt eine Einschnürung (z.B. eine Nut, Kerbe oder Perforation) auf, welche die Sollbruchstelle ausbildet.

Zusätzlich oder alternativ kann die Sollbruchstelle ebenfalls aus einem spröderen ersten Materialbereich bestehen, welcher insbesondere spröder ist als die angrenzenden zweiten Materialbereiche des Halteabschnitts und des Befestigungsabschnitts.

Gemäß einer weiteren beispielhaften Ausführungsform weist der Befestigungsabschnitt ein Gewinde auf, mittels welchem der Zielmarkenhalter an das Fixierelement aufschraubbar ist. Entsprechend kann das Fixierelement ein zu dem Gewinde des Befestigungsabschnitts korrespondierendes weiteres Gewinde aufweisen. Beispielsweise kann an dem Befestigungsabschnitt ein Bohrloch bzw. eine Aufnahmebohrung mit einem Innengewinde ausgebildet sein. Alternativ kann an dem Befestigungsabschnitt ein Bolzen mit einem Außengewinde ausgebildet werden.

Gemäß einer weiteren beispielhaften Ausführungsform weist der Befestigungsabschnitt der Zielmarkenvorrichtung eine Aufnahmebohrung, in welcher das Fixierelement des Vermessungssystems einsteckbar ist, auf. Die Aufnahmebohrung ist ausschließlich innerhalb des Befestigungsabschnitts ausgebildet. Mit anderen Worten erstreckt sich die Aufnahmebohrung zumindest teilweise durch den Befestigungsabschnitt und befindet sich ausschließlich innerhalb des Befestigungsabschnitts.

Die Aufnahmebohrung erstreckt sich somit nicht durch die Sollbruchstelle hindurch. Die Aufnahmebohrung kann sich auch vollständig durch den Befestigungsabschnitt erstrecken, allerdings nicht durch die Sollbruchstelle hindurch und auch nicht in den Halteabschnitt hinein. Der Halteabschnitt und die Sollbruchstelle sind somit frei von der Aufnahmebohrung. In dieser Ausführungsform befindet sich ein Zapfen als Fixierelement, welcher in die Aufnahmebohrung eingebracht werden kann, ausschließlich in dem Befestigungsabschnitt. Der Zapfen des Fixierelements befindet sich somit nicht in einem Bereich der Sollbruchstelle und auch nicht in einem Bereich des Halteabschnitts. Diese Ausführung bringt den Vorteil, dass im Fall eines Abbrechens der Zielmarkenvorrichtung an der Sollbruchstelle nur der Halteabschnitt der Zielmarkenvorrichtung abgerissen wird, während der Zapfen des Fixierelements unbeschädigt bleibt. Dies ist wünschenswert, denn das Anbringen des Fixierelements ist wesentlich kostenaufwändiger als das Befestigen eines neuen Halteabschnitts an dem Fixierelement.

Gemäß einer weiteren beispielhaften Ausführungsform weist die Zielmarkenvorrichtung eine Klemmschraube mit einer Klemmbacke auf. Der Befestigungsabschnitt weist eine Aufnahmebohrung auf, in welcher das Fixierelement des Vermessungssystems einsteckbar ist. Der Befestigungsabschnitt weist eine Gewindebohrung auf, wobei die Gewindebohrung derart ausgebildet ist, dass die Klemmschraube in das Innere der Aufnahmebohrung einschraubbar ist, um mit der Klemmbacke das Fixierelement festzuklemmen.

Die Klemmschraube kann beispielsweise aus einem Kunststoff bestehen. Die Klemmbacke kann an einem freien Ende der Klemmschraube drehfest oder verdrehbar an die Klemmschraube befestigt werden. Die Klemmbacke kann integral mit der Klemmschraube ausgebildet sein, so dass die Klemmbacke ein freies Ende der Klemmschraube ausbildet.

Mittels Einschraubens der Klemmschraube in die Aufnahmebohrung wird der freie Querschnitt der Aufnahmebohrung reduziert, so dass in dem Falle, in dem das Fixierelement in die Aufnahmebohrung eingeschoben wird, eine Klemmverbindung zwischen der Klemmschraube und somit dem Befestigungsabschnitt und dem Fixierelement geschaffen wird.

Gemäß einer weiteren beispielhaften Ausführungsform weist die Klemmbacke eine nach außen gewölbte Klemmfläche auf, mittels welcher das Fixierelement des Vermessungssystems in der Aufnahmebohrung einklemmbar ist. Die nach außen gewölbte Klemmfläche schiebt sich beispielsweise während des Hineinschraubens der Klemmschraube in eine Rundnut des Fixierelement hinein und verschiebt (d.h. positioniert und zentriert) somit während des Hineinschraubens das Fixierelement und die Zielmarkenvorrichtung relativ zueinander in einer gewünschten vorbestimmten Stellung. Somit kann sehr exakt die korrekte Positionierung der Zielmarkenvorrichtung vorgenommen werden.

Gemäß einer weiteren beispielhaften Ausführungsform ist das Zielmarkenelement um eine Schwenkachse schwenkbar an dem Halteabschnitt befestigbar.

Gemäß einer weiteren beispielhaften Ausführungsform weist der Halteabschnitt einen gabelförmigen Bereich mit zwei gegenüberliegenden Endbereichen auf. Das Zielmarkenelement ist zwischen den gegenüberliegenden Endbereichen angeordnet und an den gegenüberliegenden Endbereichen schwenkbar gekoppelt.

Gemäß einer beispielhaften Ausführungsform des Vermessungssystems weist das Fixierelement einen Zapfen auf, welcher in eine Aufnahmebohrung des Befestigungsabschnitts einbringbar ist. Der Zapfen ist beispielsweise Teil eines Wandbolzens als Fixierelement.

Gemäß einer beispielhaften Ausführungsform des Vermessungssystems weist der Zapfen eine umlaufende Nut, insbesondere eine Rundnut, auf. Eine Rundnut wird vorliegend als Nut bezeichnet, welche einen U-förmigen Querschnitt bzw. runde Seiten- und Bodenflächen aufweist.

Gemäß einer beispielhaften Ausführungsform weist das Fixierelement einen Fixierungsbereich zum Fixieren des Fixierelements an einer Wand der Baustelle auf. Der Fixierungsbereich weist beispielsweise in der Art eines Bohrers an einem freien Ende Schneiden auf. An Seitenflächen weist der Fixierungsbereich wendelförmig eingearbeitete Nuten auf. Somit kann mittels Rotierens des Fixierelements der Fixierungsbereich ein Loch in die Wand, beispielsweise die Tunnelwand, bohren und gleichzeitig das Fixierelement in der Wand befestigen. Dies ermöglicht ein schnelles Montieren des Fixierelements in einer Wand.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 zeigt eine schematische Darstellung einer Zielmarkenvorrichtung gemäß einer beispielhaften Ausführungsform der vorliegenden Erfindung,
Fig. 2 zeigt eine schematische Darstellung eines Fixierelements gemäß einer beispielhaften Ausführungsform der vorliegenden Erfindung,
Fig. 3 zeigt eine schematische Darstellung einer Zielmarkenvorrichtung, welche auf einem Fixierelement montiert ist, gemäß einer beispielhaften Ausführungsform der vorliegenden Erfindung, und
Fig. 4 zeigt eine herkömmliche Zielmarke.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

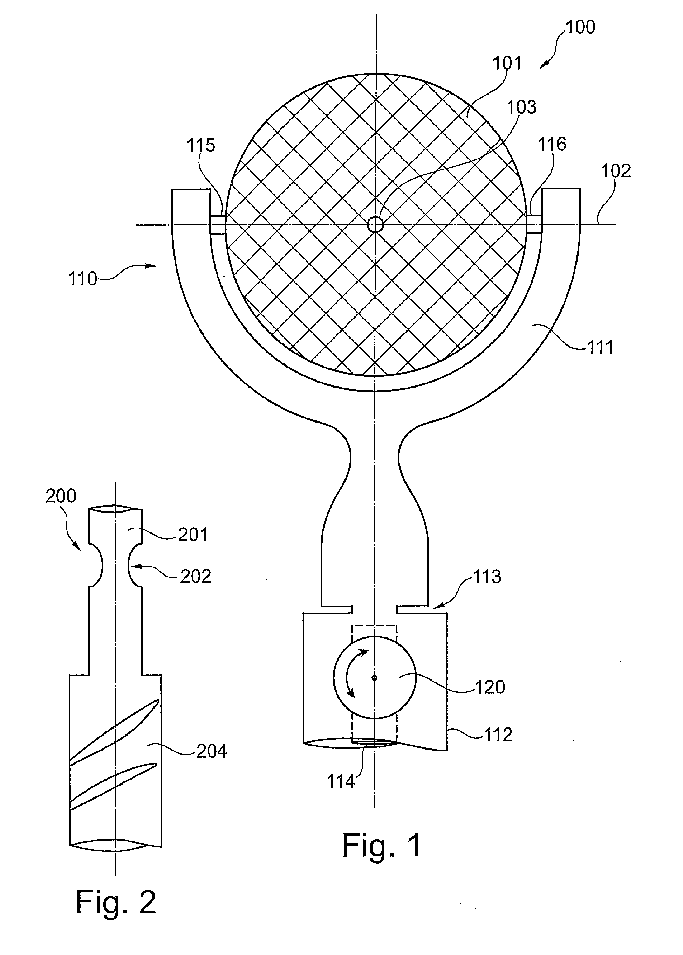

Fig. 1 zeigt eine Zielmarkenvorrichtung 100 für ein Vermessungssystem gemäß einer beispielhaften Ausführungsform der vorliegenden Erfindung. Die Zielmarkenvorrichtung 100 weist ein Zielmarkenelement 101 und einen Zielmarkenhalter 110 auf. Der Zielmarkenhalter 110 weist einen Halteabschnitt 111 auf, an welchem das Zielmarkenelement 101 befestigt ist. Der Zielmarkenhalter 110 weist einen Befestigungsabschnitt 112 auf, welcher zur lösbaren Befestigung an ein Fixierelement 200 (siehe Fig. 2) des Vermessungssystems ausgebildet ist. Der Zielmarkenhalter 110 weist eine Sollbruchstelle 113 auf, welche zwischen dem Halteabschnitt 111 und dem Befestigungsabschnitt 112 ausgebildet ist.

Das Zielmarkenelement 101 weist einen Reflektor mit einer innenliegenden Markerstelle 103 (Loch oder Punkt) auf. Das Zielmarkenelement 101 kann z.B. durch ein Fadenkreuz eines optischen Systems, z.B. mit einem Tachymeter, angezielt werden.

Der Zielmarkenhalter 110 kann aus einem Kunststoffmaterial hergestellt sein. Der Zielmarkenhalter 110 ist insbesondere integral und einstückig ausgebildet sein.

Der Befestigungsabschnitt 112 weist eine Aufnahmebohrung 114 auf, mittels welcher der Befestigungsabschnitt 112 auf das Fixierelement 200 aufgesteckt werden kann.

Die Aufnahmebohrung 114 erstreckt sich entlang einer in Fig. 1 dargestellten Linie (welche in der beispielhaften Ausführungsform senkrecht zu der Schwenkachse 102 ausgebildet ist) durch den Befestigungsabschnitt 112 hindurch und endet vor der Sollbruchstelle 113 bzw. vor dem Halteabschnitt 111. Die Aufnahmebohrung erstreckt sich also nicht durch die Sollbruchstelle 113 hindurch und auch nicht in den Halteabschnitt 111 hinein. Ein Zapfen 201 des Fixierelements 200, welcher in die Aufnahmebohrung 114 eingebracht ist, erstreckt sich somit ebenfalls nicht über die Sollbruchstelle 113 hinaus und auch nicht in den Halteabschnitt 111 hinein.

Der Zielmarkenhalter 110 weist zwischen dem Halteabschnitt 111 und dem Befestigungsabschnitt 112 eine Einschnürung auf, welche die Sollbruchstelle 113 ausbildet.

Die Zielmarkenvorrichtung 100 weist ferner eine Klemmschraube 120 mit einer Klemmbacke auf. Der Befestigungsabschnitt 112 weist die Aufnahmebohrung 114 auf, in welcher das Fixierelement 200 des Vermessungssystems einsteckbar ist. Der Befestigungsabschnitt 112 weist eine Gewindebohrung auf, wobei die Gewindebohrung derart ausgebildet ist, dass die Klemmschraube 120 von außen in das Innere der Aufnahmebohrung 114 einschraubbar ist, um mit der Klemmbacke das Fixierelement 200 festzuklemmen.

Eine Mittelachse der Gewindebohrung ist im Wesentlichen rechtwinklig zu einer Mittelachse der Aufnahmebohrung 114 ausgerichtet, wobei die Mittelachse der Gewindebohrung die Mittelachse der Aufnahmebohrung 114 schneidet.

Mittels Hineinschraubens der Klemmschraube 120 in die Aufnahmebohrung 114 wird der freie Querschnitt der Aufnahmebohrung 114 reduziert, so dass in dem Falle, in dem das Fixierelement 200 in die Aufnahmebohrung 114 eingeschoben wird, eine lösbare Klemmverbindung zwischen der Klemmschraube 120 und somit dem Befestigungsabschnitt 112 und dem Fixierelement 200 geschaffen wird.

Das Zielmarkenelement 101 um eine Schwenkachse 102 schwenkbar an dem Halteabschnitt 111 befestigbar.

Der Halteabschnitt 111 weist einen gabelförmigen Bereich mit zwei gegenüberliegenden Endbereichen auf. Das Zielmarkenelement 101 ist zwischen den gegenüberliegenden Endbereichen angeordnet und an den gegenüberliegenden Endbereichen schwenkbar gekoppelt. Der Halteabschnitt 111 des Zielmarkenhalters 110 weist z.B. an den Endbereichen Befestigungspins 115, 116 zur Befestigung des Zielmarkenelements 101 auf.

**Fig. 2** zeigt das Fixierelement 200, welches beispielsweise einen verzinkten Metallbolzen darstellt. Der Metallbolzen ist in einer Wandbohrung, zum Beispiel einer Tunnelwand, befestigt bzw. räumlich fixiert. Das Fixierelement 200 aus Fig. 2 weist beispielsweise einen Zapfen 201 auf, welcher in die Aufnahmebohrung 114 des Zielmarkenhalters 110 einschiebbar ist. Ferner weist das Fixierelement 200 eine Nut 202, insbesondere eine Rundnut auf.

Die Klemmbacke der Klemmschraube 120 weist z.B. eine nach außen gewölbte Klemmfläche auf, mittels welcher das Fixierelement 200 in der Aufnahmebohrung 114 einklemmbar ist. Die nach außen gewölbte Klemmfläche schiebt sich beispielsweise während des Hineinschraubens der Klemmschraube 120 in die Rundnut 202 des Fixierelement 200 hinein und zentriert somit während des Hineinschrauben das Fixierelement 200 und die Zielmarkenvorrichtung 100 relativ zueinander in einer gewünschten vorbestimmten Stellung. Somit kann sehr exakt die korrekte Positionierung der Zielmarkenvorrichtung 100 relativ zu dem Fixierelement 200 vorgenommen werden.

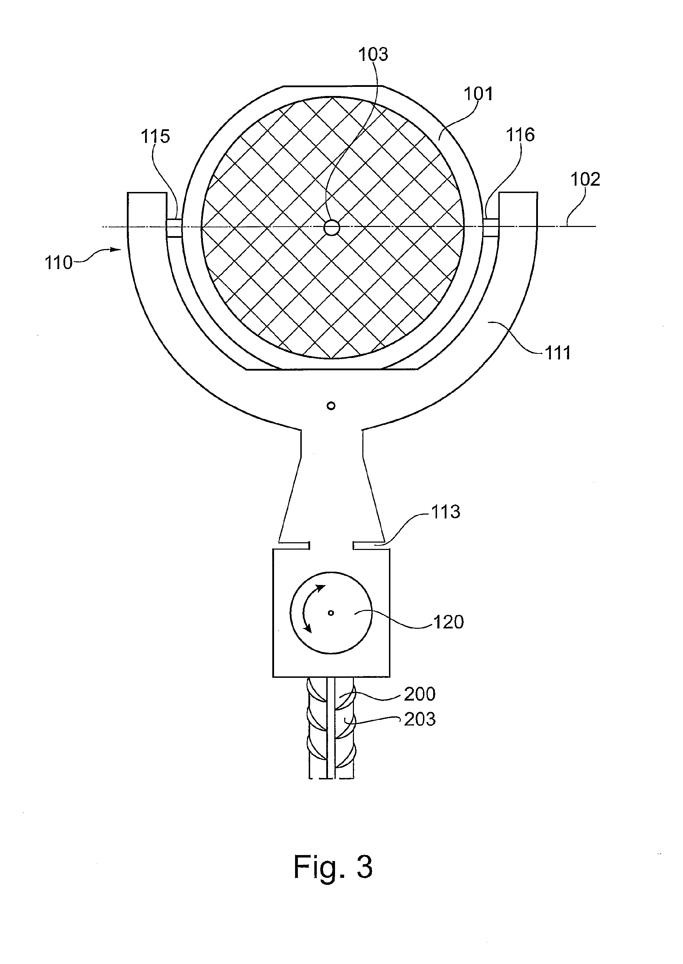

**Fig. 3** zeigt das Vermessungssystem mit der Zielmarkenvorrichtung 100 aus Fig. 1, welche auf dem Fixierelement 200 aus Fig. 2 montiert ist,

Die Sollbruchstelle 113 ist im Vergleich zu der herkömmlichen Zielmarke aus Fig. 4 zwischen dem Halteabschnitt 111 und dem Befestigungsabschnitt 113 des Zielmarkenhalters 110 ausgebildet. Dies ermöglicht im Gegensatz zu der herkömmlichen Zielmarke 400, dass kein Adapter mit Sollbruchstelle mehr zwischen dem Befestigungsabschnitt 113 und beispielsweise einem Wandbolzen als Fixierelement 200 ausgebildet werden muss. Somit ist es mit der beschriebenen Zielmarkenvorrichtung 100 erstmalig möglich, eine integrale und einstückig ausgebildete Zielmarkenvorrichtung 100 bereitzustellen, ohne die Funktionalität einzuschränken. Aufgrund dieser einstückigen und integralen Ausbildung des Zielmarkenhalters 110 können somit Material und entsprechend Herstellkosten gesenkt werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste:

- 100: Zielmarkenvorrichtung
- 101: Zielmarkenelement
- 102: Schwenkachse
- 103: Markerstelle
- 110: Zielmarkenhalter
- 111: Halteabschnitt
- 112: Befestigungsabschnitt
- 113: Sollbruchstelle
- 114: Aufnahmebohrung
- 115: Befestigungspin
- 116: Befestigungspin
- 120: Klemmschraube
- 200: Fixierelement
- 201: Zapfen
- 202: Nut
- 203: Fixierungsbereich
- 400: herkömmliche Zielmarke
- 401: herkömmliches Target
- 402: herkömmlicher Adapter mit Wildzapfen
- 403: herkömmlicher Wandanker
- 404: herkömmliche Klemmschraube
- 405: herkömmliche Sollbruchstelle
- 406: herkömmlicher Reflektor

## Patentansprüche

1. Zielmarkenvorrichtung (100) für ein Vermessungssystem, wobei die Zielmarkenvorrichtung (100) aufweist
ein Zielmarkenelement (101), und
einen Zielmarkenhalter (110),
wobei der Zielmarkenhalter (110) einen Halteabschnitt (111) aufweist, an welchem das Zielmarkenelement (101) befestigt ist,
wobei der Zielmarkenhalter (110) einen Befestigungsabschnitt (112) aufweist, welcher zur lösbaren Befestigung an ein Fixierelement (200) des Vermessungssystems ausgebildet ist, und
wobei der Zielmarkenhalter (110) eine Sollbruchstelle (113) aufweist, welche zwischen dem Halteabschnitt (111) und dem Befestigungsabschnitt (112) ausgebildet ist.

2. Zielmarkenvorrichtung (100) gemäß Anspruch 1,
wobei der Zielmarkenhalter (110) zwischen dem Halteabschnitt (111) und dem Befestigungsabschnitt (112) eine Einschnürung aufweist, welche die Sollbruchstelle (113) ausbildet.

3. Zielmarkenvorrichtung (100) gemäß Anspruch 1 oder 2,
wobei der Befestigungsabschnitt (112) ein Gewinde aufweist, mittels welchem der Zielmarkenhalter (110) an das Fixierelement (200) aufschraubbar ist.

4. Zielmarkenvorrichtung (100) gemäß einem der Ansprüche 1 bis 3,
wobei der Befestigungsabschnitt (112) eine Aufnahmebohrung (114), in welcher das Fixierelement (200) des Vermessungssystems einsteckbar ist, aufweist,
wobei die Aufnahmebohrung (114) ausschließlich innerhalb des Befestigungsabschnitts (112) ausgebildet ist.

5. Zielmarkenvorrichtung (100) gemäß einem der Ansprüche 1 bis 4, ferner aufweisend
eine Klemmschraube (120) mit einer Klemmbacke,
wobei der Befestigungsabschnitt (112) eine Aufnahmebohrung (114) aufweist, in welcher das Fixierelement (200) des Vermessungssystems einsteckbar ist, wobei der Befestigungsabschnitt (112) eine Gewindebohrung aufweist,
wobei die Gewindebohrung derart ausgebildet ist, dass die Klemmschraube (120) in das Innere der Aufnahmebohrung (114) einschraubbar ist, um mit der Klemmbacke das Fixierelement (200) festzuklemmen.

6. Zielmarkenvorrichtung (100) gemäß Anspruch 5,
wobei die Klemmbacke eine nach außen gewölbte Klemmfläche aufweist, mittels welcher das Fixierelement (200) des Vermessungssystems in der Aufnahmebohrung (114) einklemmbar ist.

7. Zielmarkenvorrichtung (100) gemäß einem der Ansprüche 1 bis 6,
wobei das Zielmarkenelement (101) um eine Schwenkachse (102) schwenkbar an dem Halteabschnitt (111) befestigbar ist.

8. Zielmarkenvorrichtung (100) gemäß Anspruch 7,
wobei der Halteabschnitt (111) einen gabelförmigen Bereich mit zwei gegenüberliegenden Endbereichen aufweist,
wobei das Zielmarkenelement (101) zwischen den gegenüberliegenden Endbereichen angeordnet ist und an den gegenüberliegenden Endbereichen schwenkbar gekoppelt ist.

9. Vermessungssystem zum Vermessen einer Baustelle, insbesondere einer Tunnelbaustelle, wobei das Vermessungssystem aufweist,
eine Zielmarkenvorrichtung (100) gemäß einem der Ansprüche 1 bis 8, das Fixierelement (200),
wobei der Befestigungsabschnitt (112) lösbar an das Fixierelement (200) befestigt ist.

10. Vermessungssystem gemäß Anspruch 9,
wobei das Fixierelement (200) einen Zapfen (201) aufweist, welcher in eine Aufnahmebohrung (114) des Befestigungsabschnitts (112) einbringbar ist.

11. Vermessungssystem gemäß Anspruch 10,
wobei der Zapfen (201) eine umlaufende Nut (202), insbesondere eine Rundnut, aufweist.

12. Vermessungssystem gemäß einem der Ansprüche 9 bis 11,
wobei das Fixierelement (200) einen Fixierungsbereich (203) zum Fixieren des Fixierelements (200) an einer Wand der Baustelle aufweist.

13. Verfahren zum Platzieren einer Zielmarkenvorrichtung (100) in einer Baustelle, das Verfahren aufweisend
lösbares Befestigen eines Befestigungsabschnitts (112) der Zielmarkenvorrichtung (100) an ein Fixierelement (200) des Vermessungssystems,
wobei der Zielmarkenhalter (110) einen Halteabschnitt (111) aufweist, an welchem ein Zielmarkenelement (101) befestigt ist,
wobei der Zielmarkenhalter (110) eine Sollbruchstelle (113) aufweist, welche zwischen dem Halteabschnitt (111) und dem Befestigungsabschnitt (112) ausgebildet ist.
